## Europäisches Patentamt

## European Patent Office

## Office européen des brevets

(11) Publication number: **0 176 647**
**B1**

(12) EUROPEAN PATENT SPECIFICATION

(45) Date of publication of patent specification: 02.12.87

(51) Int. Cl.⁴: **B 60 B 21/10**

(21) Application number: 84630149.7

(22) Date of filing: 05.10.84

(54) Vehicle rim.

(43) Date of publication of application:
09.04.86 Bulletin 86/15

(45) Publication of the grant of the patent:
02.12.87 Bulletin 87/49

(84) Designated Contracting States:
DE GB LU

(56) References cited:
GB-A-2 117 332
GB-A-2 121 738
US-A-4 246 950

(73) Proprietor: THE GOODYEAR TIRE & RUBBER
COMPANY
1144 East Market Street
Akron, Ohio 44316-0001 (US)

(72) Inventor: Venneker, Johannes Adrianus
26, rue de Bastogne
L-9154 Grosbous (LU)

(74) Representative: Weyland, Joseph Jean Pierre
Goodyear Technical Center
Luxembourg Patent Department
Avenue Gordon Smith
L-7750 Colmar-Berg (LU)

## Description

The present invention relates to a rim for pneumatic tires which is designed to minimize bead unseating during the use of the tire, especially in the uninflated state. More specifically, the invention relates to a rim comprising at least one asymmetric hump between the bead and the rim well. Such rims, as described in US—A—4 246 950, GB—A—2 117 332, and GB—A—2 121 738, have shown that they are capable of effectively retaining the beads of the tires when the tires have an inflation pressure which is substantially lower than the recommended pressure.

These rims are provided with a pair of bead portions and comprise a pair of circumferentially extending flanges in axially spaced apart relationship and a pair of annular axially spaced apart bead seats extending axially inwardly from the flanges towards the center plane of the rim, a well comprising a cylindrical base portion having a smaller diameter than that of the bead seats, situated axially between the bead seats, and at least one bead retention means situated between the well and at least one bead seat, whereby the bead retention means comprises at least one asymmetric hump comprising a radially extended portion which extends about the circumference of the rim for at least a portion of the circumference at a single axial position on the rim, the height of the radially extended portion starting from one circumferential end of the radially extended portion at a first predetermined radius, proceeding circumferentially about the rim gradually and a continuously increasing to a maximum radial height at a second predetermined radius with respect to the axis of rotation of the rim, then gradually and continuously decreasing back to the first predetermined radius at the other circumferential end of the radially extended portion and comprising axially inner and axially outer ramp surfaces.

However, projections such as asymmetric humps can pose certain difficulties in mounting a tire onto the rim. It is believed that the mounting difficulties encountered with prior art rims arise from the fact that the included angle between the axially inner and outer ramp surfaces of the asymmetric hump which is situated axially closest to the well of the rim is an angle which varies along the circumferential length of the hump. The resistance that the hump may present to the seating of the beads varies along its circumferential length. The tire bead slips more easily into place along the portion of the asymmetric hump where the included angle between the axially inner and axially outer ramp surfaces is smallest.

According to the present invention the difficulties in tire mounting can be overcome by providing that the asymmetric hump, or humps, axially closest to the well of the rim have their axially inner and axially outer ramp surfaces arranged such that the included angle formed by said ramp surfaces is substantially constant along the entire circumferential length of the asymmetric hump, or humps.

The invention will now be described with reference to the accompanying drawings.

Figure 1 illustrates a cross sectional fragmentary view of a prior art rim.

Figure 2 illustrates a fragmentary radial cross sectional plan view of a rim according to the present invention.

Figure 3 illustrates a cross sectional fragmentary view of a rim according to the present invention.

Figure 4 illustrates a cross sectional fragmentary view of a modified rim according to the present invention.

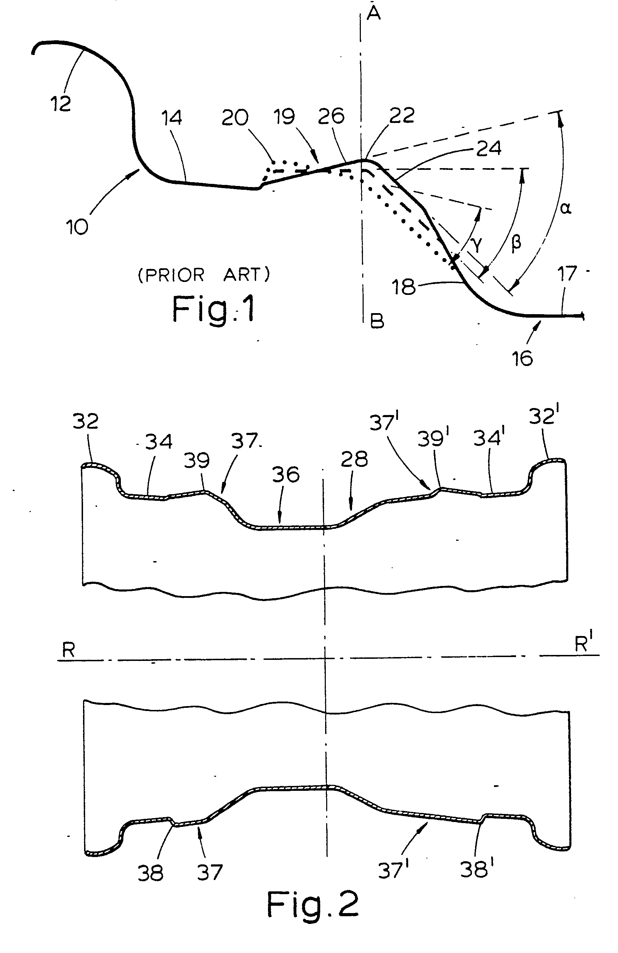

Referring to Figure 1, there is illustrated a partial cross sectional view of a rim 10 in accordance with the prior art. Throughout this specification the term "rim" is used to designate a cylindrical structure upon which a tire is mounted and which is used in conjunction with either an integral or a separate wheel disk. The rim 10 comprises a pair of circumferentially extending flanges 12 which are axially spaced apart, of which only one has been illustrated. The radially inner end of the flange merges into the axially outer end of the bead seat 14. The rim 10 further has a well 16 which comprises a cylindrical base portion 17 and two side portions 18 of which only one has been shown. At the the axially inner end of at least one of the bead seats 14 there is provided a bead retention means 19 which connects the bead seat 14 to the well 16. The bead retention means 19 illustrated comprises two asymmetric humps 20, 22 which extend circumferentially completely around the rim. For the purposes of this invention, an asymmetric hump shall be considered as a shaping which when viewed in a plane perpendicular to the rotational axis of the rim has a radially extended portion which gradually and continuously increases from a first predetermined radius at one end of the rim and proceeds to a maximum radial height at a second predetermined radius which respect to the axis of rotation of the rim, then gradually and continuously decreases back to the first predetermined radius at the other circumferential end of the radially extended portion.

Figure 1 illustrates 3 profiles of cross sections which are taken in axial planes at various angular positions along the circumference of the rim. By axial plane is meant throughout this specification a plane which contains the axis of rotation of the rim.

The profile shown in solid line is a cross section in an axial plane taken along that angular position of the circumference at which the asymmetric hump 22 axially closest to the rim well has its maximum radial height, hereinafter referred to as the 0° position. The dotted line profile and the broken line profile show the contour of the rim in axial planes at the 180° angular position, and at the 90° and 270° angular positions respectively.

As can be seen in Figure 1, each asymmetric hump comprises two ramp surfaces, having a different orientation with respect to the axial direction of the rim. The asymmetric hump 22 axially closest to the rim well 16 comprises an axially inner ramp surface 24 and an axially outer ramp surface 26.

Further details concerning asymmetric humps can be found in US—A—4 246 950 which describes a single such hump and GB—A—2 117 332, GB—A—2 121 738 which describe a bead retention means making use of a combination of more than one asymmetric hump of the kind described in the afore mentioned US patent.

If a combination of two asymmetric humps is used as a bead retention means, as shown for example in Figure 1 it is preferred that the maximum radial extension of each asymmetric hump occurs in the same axial plane at diametrically opposed angular positions. This becomes particularly apparent from Figure 1 where both asymmetric humps 20 and 22 have been shown with their maximum radial extension: full line contour for hump 22 in the 0° position and dotted line contour for hump 20 in the diametrically opposed 180° position.

When a tire is fitted to a rim 10 such as shown in Figure 1, the bead portion of the tire is shifted axially from the well 16 towads the bead seat 14. During this movement the tire bead first moves along the axially inner ramp surface 24. The resistance to the axial movement of the tire bead that the axially inner asymmetric hump 22 presents, changes abruptly once the tire bead reaches the plane perpendicular to the rotational axis of the rim which contains the maximum radial height of asymmetric hump 22. This plane is represented by dashed line A—B on Figure 1. The abrupt change is due to the change in the angular orientation of ramp surfaces 24 and 26 with respect to the rotational axis of the rim. At the 0° position of the rim the angle that the ramp surfaces 24, 26 make with the axial direction changes by an amount $\alpha$ and at the 90° and 270° positions, respectively 0° position, the change in angular orientation is $\beta$, respectively $\gamma$, whereby $\gamma < \beta < \alpha$. This variation in the resistance that the bead retention means presents to the axial movement of the tire bead can pose certain difficulties in mounting a tire onto the rim.

The present invention, which is illustrated in Figures 2, 3 and 4, aims at providing a rim which allows for easy manual or automatic mounting.

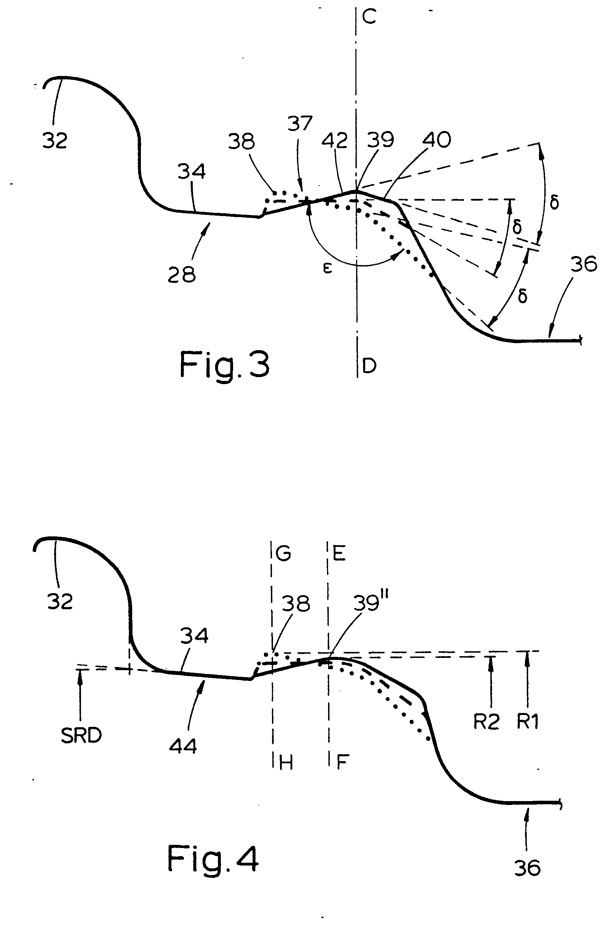

Figure 2 illustrates a plan view of a radial cross section of a rim according to the present invention whereby the center part around the axis of rotation R—R' of the rim has been broken away for convenience of illustration. The rim 28 comprises axially spaced apart flanges 32, 32', adjacent bead seats 34, 34', and a well 36. These portions of the rim 28 are identical to those of the prior art shown in Figure 1 and described in connection therewith. The bead retention means 37, 37' which are disposed between the well 36 and the bead seats 34, 34' each comprises two asymmetric humps 38, 39 and 38', 39' respectively, which extend around the circumference of the rim. The cross section that is illustrated has been taken along a radial plane where the asymmetric humps 39, 39' axially closest the rim well 36 are at their maximum radial extension. It follows that in Figure 2 the upper contour of the rim represents the contour at the 0° position, whereas the bottom contour of the rim represents the contour at the 180° position. This contour represents the asymmetric humps 39, 39', axially closest to the bead seats 34, 34', which are at their maximum radial extension. These two contours together with the contours at the 90° and 270° angular positions are shown in more detail in Figure 3 which is a partial cross sectional view of the rim according to an embodiment of the invention illustrated in Figure 2.

Figure 3 shows an enlarged view of the left hand portion of the rim 28 of Figure 2. The bead retention means 37 comprises two asymmetric humps 38, 39, which extend around the circumference of the rim. The asymmetric hump 39 axially closest to the rim well 36 comprises an axially inner ramp surface 40 and an axially outer ramp surface 42. Figure 3 illustrates three different profiles of axial cross sections of the rim taken at three different angular positions around the circumference of the rim. The solid line profile illustrates the axial contour of the rim in an axial plane in the angular position of the rim circumference where the asymmetric hump 39 axially closest to the rim well 36 reaches its maximum radial height, referred to as the 0° position. The dotted line profile and the broken line profile show the contour of the rim in axial planes at the 180° angular position, and at the 90° and 270° angular positions respectively. Line C—D illustrates a plane perpendicular to the rotational axis of the rim which includes the maximum radial extension of asymmetric hump 39.

The axially inner ramp surface 40 makes an angle with the axis of rotation of the rim which, contrary to the prior art rims, is not constant, but varies around the circumference of the rim. The orientation of the axially inner ramp surface 40 is such that the included angle $\varepsilon$ it forms with the axially outer ramp surface 42 in any axial plane is substantially constant along the entire circumferential length of the hump. In order to give more clarity to the drawings, this angle $\varepsilon$ has only been shown on Figure 3 for the contour at the 180° position (dotted line). The angle $\delta$ which is the angle that the projection of the axially outer ramp surface 42 makes with the axially inner ramp surface 40 is also constant along the circumferential length of the asymmetric hump and represents the change in angular orientation with respect to the rotational axis of the rim of the axially inner and outer ramp surfaces 40 and 42. It is the supplement of the included angle and is related to $\delta$ through the formula $\delta = 180° - \varepsilon$.

It is preferred that the change in angular orientation between the two ramp surfaces, $\delta$, be comprised between 20° and 50° which means that the included angle $\varepsilon$ between ramp surfaces 40 and 42 be comprised between 130° and 160°.

Whereas the invention has so far been illustrated with a rim comprising two bead retaining means each comprising two asymmetric humps, it is not limited to such a configuration and it equally applies to a rim comprising only one bead retention means adjacent to only one of the bead seats of the rim and it applies to rims having one or two bead retention means each comprising only one asymmetric hump.

Figure 4, illustrates a rim according to an alternate embodiment of the present invention wherein each bead retention means comprises two adjacent asymmetric humps.

The rim 44 illustrated in Figure 4 is similar to the rim 28 illustrated in Figures 2 and 3 and like reference numerals represent identical parts. The rim 44 in Figure 4 is different from the rim 28 in Figures 2 and 3 in that the maximum radial extension of the asymmetric hump 39'' which is axially closest to the rim well 36 and which is contained in the radial plane represented by line E—F is smaller than the maximum radial extension of the asymmetric hump 38 which is axially closest to the bead seat 34 and which is contained in the radial plane represented by line G—H. The radial planes represented by lines E—F and G—H are perpendicular to the rotational axis of the rim. Figure 4 shows that asymmetric hump 38 has a maximum radial extension $R_1$, whereas asymmetric hump 39'' has a maximum radial extension $R_2$ with respect to the rotational axis of the rim.

It has become apparent that, when a bead retention means comprising two adjacent asymmetric humps is used, the bead retaining function of the bead retention means depends primarily on the maximum radial extension of the asymmetric hump 38 axially closest to the bead seat and on the angle that the radially outer ramp surface of the asymmetric hump 39'' axially closest to the rim well makes with the axial direction. The maximum radial extension $R_2$ of asymmetric hump 39'' appears to be of a secondary importance, as far as the bead retention function of the double hump is concerned. However, a reduction in seating pressure, and therefore easier mounting of a tire onto the rim, can be achieved if the maximum radial extension of the asymmetric hump 39'' axially closest to the rim well 36 is smaller than the maximum radial extension of the asymmetric hump 38 axially closest to the bead seat, in other words, if $R_2$ is smaller than $R_1$.

If SRD is the specified rim diameter of the rim, as hereafter defined, it is preferred that $R_2$ is in the range of between

$$\frac{SRD}{2} + \frac{R_1 - 2}{2} \text{ and } R_1$$

The specified rim diameter SRD of a rim, according to the European Tyre and Rim Technical organisation (ETRTO), is defined as the diameter of the cylindrical surface that is parallel to the rotational axis of the rim and which passes through the two circles defined by the intersections of the extensions of the flanges and the extensions of the bead seats of the rim.

## Claims

1. A rim (28) for a pneumatic tire having a pair of bead portions, comprising a pair of circumferentially extending flanges (32, 32') in axially spaced apart relationship and a pair of annular axially spaced apart bead seats (34, 34') extending axially inwardly from the flanges (32, 32') towards the center plane of the rim (28), a well (36) comprising a cylindrical base portion having a smaller diameter than that of the bead seats (34, 34'), situated axially between the bead seats (34, 34'), and at least one bead retention means (37, 37') situated between the well and at least one bead seat (34, 34'), whereby the bead retention means comprises at least one asymmetric hump (39, 39') comprising a radially extended portion which extends about the circumference of the rim (28) for at least a portion of the circumference at a single axial position on the rim, the height of the radially extended portion starting from one circumferential end of the radially extended portion at a first predetermined radius, proceeding circumferentially about the rim gradually and continuously increasing to a maximum radial height at a second predetermined radius with respect to the axis of rotation of the rim, then gradually and continuously decreasing back to the first predetermined radius at the other circumferential end of the radially extended portion and comprising axially inner (40) and axially outer (42) ramp surfaces characterized in that the included angle ε formed by said ramp surfaces is substantially constant along the entire circumferential length of the asymmetric hump (39, 39').

2. A rim according to claim 1, characterized in that the included angle ε between said ramp surfaces in any axial plane of the rim is an angle comprised between 130° and 160°.

3. A rim according to Claim 1 or 2, characterized in that each bead retaining means (37, 37') comprises two asymmetric humps.

4. A rim according to claim 3 characterized in that the maximum radial extension ($R_2$) of the asymmetric hump (39'') axially closest to the well (36) of the rim is smaller than the maximum radial extension ($R_1$) of the asymmetric hump (38) axially closest to the bead seat (34).

5. A rim according to claim 4 characterized in that the maximum radial extension ($R_2$) of the asymmetric hump (39'') axially closest to the well (36) of the rim is defined by the following formula:

$$\frac{SRD}{2} + \frac{\dfrac{SRD}{R_1}-2}{2} < R_2 < R_1$$

where $R_1$ is the maximum radial extension of the asymmetric hump axially closest to the bead seat and SRD is the specified rim diameter of the rim.

## Patentansprüche

1. Felge (28) für einen Luftreifen, der ein Paar von Wulstabschnitten aufweist, mit einem Paar sich über den Umfang erstreckenden Flanschen (32, 32'), die in Axialrichtung voneinander beabstandet sind, mit einem Paar von ringförmigen, in Axialrichtung beabstandeten Wulstsitzen (34, 34'), die sich in Axialrichtung nach innen von den Flanschen (32, 32') zu der Mittelebene der Felge (28) hin erstrecken, mit einem Tiefbett (36), das einen zylindrischen Basisabschnitt mit einem geringeren Durchmesser als dem Durchmesser der Wulstsitze (34, 34') aufweist, und in Axialrichtung zwischen den Wulstsitzen (34, 34') angeordnet ist, und mit wenigstens einer Wulsthalteeinrichtung (37, 37'), die zwischen dem Tiefbett und wenigstens einem Wulstsitz (34, 34') angeordnet ist, wobei die Wulsthalteeinrichtung wenigstens einen asymmetrischen Höcker (39, 39') mit einem sich in Radialrichtung erstreckenden Abschnitt aufweist, welcher sich über den Umfang der Felge (28) auf wenigstens einem Abschnitt des Umfanges in einer einzigen Axialstellung auf der Felge erstreckt, wobei die Höhe des sich radial erstreckenden Abschnittes ausgehend von einem Umfangsende des sich radial erstreckenden Abschnittes mit einem ersten bestimmten Radius sich in Umfangsrichtung über die Felge allmâhlich und kontinuierlich anwachsend auf eine maximale radiale Höhe mit einem zweiten bestimmten Radius gegenüber der Drehachse der Felge fortsetzt und dann allmählich und kontinuierlich abnimmt auf den ersten bestimmten Radius an dem anderen Umfangsende des sich radial erstreckenden Abschnittes, und wobei in Axialrichtung innere (40) und äußere (42) Rampenflächen vorgesehen sind, dadurch gekennzeichnet, daß der Öfnungswinkel ε, der von den Rampenflächen eingeschlossen wird, im wesentlichen konstant ist über die gesamte Umfangsfläche des asymmetrischen Höckers (39, 39').

2. Felge nach Anspruch 1, dadurch gekennzeichnet, daß der Öffnungswinkel ε zwischen den Rampenflächen in irgendeiner Axialebene der Felge ein Winkel zwischen 130° und 160° ist.

3. Felge nach Anspruch 1 oder 2, dadurch gekennzeichnet, daß jede Wulsthalteeinrichtung (37, 37') zwei asymmetrische Höcker aufweist.

4. Felge nach Anspruch 3, dadurch gekennzeichnet, daß die in Axialrichtung dem Tiefbett (36) der Felge am nächsten liegende maximale radiale Erstreckung (R₂) des asymmetrischen Höckers (39'') geringer ist als die in Axialrichtung dem Wulstsitz (34) am nächsten liegende maximale radiale Erstreckung ($R_1$) des asymmetrischen Höckers (38).

5. Felge nach Anspruch 4, dadurch gekennzeichnet, daß die in Axialrichtung dem Tiefbett (36) der Felge am nächsten liegende maximale radiale Erstreckung ($R_2$) des asymmetrischen Höckers (39'') definiert ist durch nachstehende Formel:

$$\frac{SRD}{2} + \frac{\dfrac{SRD}{R_1}-2}{2} < R_2 < R_1$$

wobei $R_1$ die in Axialrichtung dem Wulstsitz am nächsten liegende maximale radiale Erstreckung des asymmetrischen Höckers un SRD der vorgeschriebene Felgendurchmesser der Felge ist.

## Revendications

1. Jante (28) pour un bandage pneumatique comportant deux talons, cette jante comprenant deux rebords circonférentiels (32, 32') qui sont espacés axialement l'un de l'autre, ainsi que deux sièges de talons annulaires (34, 34') qui sont également espacés axialement l'un de l'autre et qui s'étendent axialement vers l'intérieur à partir des rebords (32, 32') en direction du plan central de la jante (28), une gorge (36) comprenant une partie de base cylindrique dont le diamètre est plus petit que celui des sièges de talons (34, 34') et qui est située axialement entre ces derniers, ainsi qu'au moins un moyen de retenue de talon (37, 37') situé entre la gorge et au moins un siège de talon (34, 34'), de telle sorte que le moyen de retenue de talon comprenne au moins un "hump" asymétrique (39, 39') comportant une partie prolongée radialement qui s'étend autour de la circonférence de la jante (28) sur au moins une partie de cette circonférence et dans une seule position axiale de la jante, la hauteur de la partie prolongée radialement partant d'une extrémité circonférentielle de celle-ci à un premier rayon prédéterminé, pour progresser circonférentiellement autour de la jante en augmentant graduellement et continuellement jusqu'à une hauteur radiale maximum à un second rayon prédéterminé par rapport à l'axe de rotation de la jante, avant de diminuer ensuite graduellement et continuellement jusqu'au premier rayon prédéterminé à l'autre extrémité circonférentielle de la partie prolongée radialement, ce "hump" asymétrique comprenant également des surfaces intérieure (40) et extérieure (42) axiales formant rampes, caractérisée en ce que l'angle inclus ε défini par les surfaces formant rampes est pratiquement constant sur toute la longueur circonférentielle du "hump" asymétrique (39, 39').

2. Jante selon la revendication 1, caractérisée en ce que l'angle inclus ε défini entre les surfaces formant rampes dans n'importe quel plan axial de la jante est un angle compris entre 130° et 160°.

3. Jante selon la rèvendication 1 ou 2, caracté-risée en ce que chaque moyen de retenue de talon (37, 37') comprend deux "humps" asymétriques.

4. Jante selon la revendication 3, caractérisée en ce que l'étendue radiale maximum ($R_2$) du "hump" asymétrique (39'') qui est axialement le plus proche de la gorge (36) de la jante, est plus petite que l'étendue radiale maximum ($R_1$) du "hump" asymétrique (38) qui est axialement le plus proche du siège de talon (34).

5. Jante selon la revendication 4, caractérisée en ce que l'étendue radiale maximum ($R_2$) du "hump" asymétrique (39'') qui est axialement le plus proche de la gorge (36) de la jante, est définie par la formule ci-après:

$$\frac{SRD}{2} + \frac{\dfrac{SRD}{R_1 - 2}}{2} < R_2 < R_1$$

dans laquelle $R_1$ est l'étendue radiale maximum du "hump" asymétrique qui est axialement le plus proche du siège de talon, et SRD est le diamétre de jante spécifié.

(PRIOR ART)
Fig.1

Fig.2

Fig.3

Fig.4